# EUROPEAN PATENT APPLICATION

(11) **EP 4 837 749 A1**
(43) Date of publication of application: **11.11.2026**
(21) Application number: 25175204.4
(22) Date of filing: 08.05.2025
(51) Int. Cl.: B60B 27/02, B60B 27/04

(54) **ONE-PIECE HUB SHELL OF A BICYCLE AND MANUFACTURING METHOD THEREOF**

(71) Applicant: Hsieh, Yi-Tsang, 422 Taichung City (TW)
(72) Inventor: Hsieh, Yi-Tsang, 422 Taichung City (TW)
(74) Representative: Lang, Christian

(57) **Abstract**

A one-piece hub shell of a bicycle and a manufacturing method thereof are provided. The method sequentially includes: a forged blank forming step: forging a metal blank into a hub shell blank, wherein the hub shell blank at least includes a spindle groove along an axis; a tooth position machining step: machining the spindle groove of the hub shell blank to form a tooth positioning portion in the spindle groove; and a tooth profile machining step: machining the tooth positioning portion of the hub shell blank to form a toothed portion on the tooth positioning portion, and the toothed portion including a plurality of ratchet teeth annularly arranged and surrounding the axis.

## Description

### BACKGROUND

### Field of the Invention

The present invention relates to a bicycle hub, and more particularly to a one-piece hub shell of a bicycle and a manufacturing method thereof.

### Description of Related Art

The bicycle hub is one of the core components of a bicycle's drive train, responsible for connecting the wheel assembly to the frame and providing smooth rotational functionality. Conventional bicycle hubs can be seen in the patents, for example, TWM629516 and TWM623180.

In the structure of a bicycle hub, the hub shell and the ratchet ring are two critical components. However, the hub shell and the ratchet ring are manufactured and machined separately before being assembled, leading to at least the following drawbacks.
(1) Concentricity Error. The hub shell and the ratchet ring typically require high-precision concentricity to ensure the smooth operation of the pawl system. When the hub shell and the ratchet ring are machined in different manufacturing steps, tolerance accumulation may occur, affecting the accuracy of gear engagement, thereby reducing transmission efficiency and durability.
(2) Assembly Error and Deformation Risk. When the ratchet ring and the hub shell are manufactured and machined separately, uneven gaps or misalignment may occur during assembly, leading to engagement delay or abnormal wear. Additionally, the assembly process often involves pressing or threading the ratchet ring into the hub shell, which may cause part deformation or stress concentration, reducing service life. This may also result in deformation of the ratchet ring or hub shell, affecting concentricity and durability.
(3) Limited Material Selection. To minimize machining and assembly errors, similar or highly compatible materials are typically required. However, this may restrict the application of certain advanced materials (such as titanium alloys or composite materials), making lightweight or high-strength designs more difficult to achieve.
(4) High Manufacturing Costs. When the ratchet ring and the hub shell are manufactured and machined separately, additional machining steps are inevitably introduced, leading to the drawback of elevated production costs for bicycle hubs.

### SUMMARY

An objective of the present invention is to provide a one-piece hub shell of a bicycle and a manufacturing method thereof that are capable of solving one of the above-mentioned problems.

To achieve the above-mentioned objective, the present invention provides a method of manufacturing a one-piece hub shell of a bicycle, which sequentially comprises: a forged blank forming step: forging a metal blank into a hub shell blank, wherein the hub shell blank at least includes a spindle groove along an axis; a tooth position machining step: machining the spindle groove of the hub shell blank to form a tooth positioning portion in the spindle groove; and a tooth profile machining step: machining the tooth positioning portion of the hub shell blank to form a toothed portion on the tooth positioning portion, and the toothed portion including a plurality of ratchet teeth annularly arranged and surrounding the axis.

The technical advantage of the present invention is described as follows. Through the sequential implementation of the forged blank forming step, the tooth position machining step, and the tooth profile machining step, the accomplished hub shell, in addition to the structure of the conventional hub shell, also has the toothed portion formed with the hub shell. Therefore, the hub shell can be connected with the pawl system without being additionally assembled with a ratchet ring, effectively reducing the concentricity error, assembly error, deformation risk, and limitations in material selection caused by additional assembly processes, while improving the assembly efficiency, reliability, and service strength of the hub shell and reducing the machining cost.

Preferably, during the tooth profile machining step, the toothed portion includes a flat annular surface facing outside; and a final shaping step is provided after the tooth profile machining step to machine the flat annular surface of the toothed portion to form a plurality of weight-reduction grooves recessed from the flat annular surface and surrounding the axis, thereby enabling the hub shell to be lightweight, effectively improving riding efficiency, reducing energy consumption, and increasing steering sensitivity and comfort.

Preferably, the tooth position machining step, the tooth profile machining step, and the final shaping step are performed using a CNC processing machine.

Similarly, to achieve the above-mentioned objective, the present invention provides a method for manufacturing a one-piece hub shell of a bicycle, which sequentially comprises : a forged blank forming step: forging a metal blank into a hub shell blank, wherein the hub shell blank at least includes a spindle groove along an axis, the spindle groove includes a tooth positioning portion, the tooth positioning portion includes a rudiment of toothed portion, the rudiment of toothed portion includes a plurality of rudiments of ratchet teeth annularly arranged and surrounding the axis; and a final shaping step: machining the rudiment of toothed portion of the hub shell blank to complete a toothed portion on the rudiment of toothed portion, wherein the toothed portion includes a plurality of ratchet teeth.

Preferably, during the final shaping step, the toothed portion includes an outwardly facing annular surface, the annular surface is machined to form a plurality of weight-reduction grooves recessed from the annular surface and surrounding the axis.

Preferably, the final shaping step is performed using a CNC processing machine.

In addition, to achieve the above-mentioned objective, the present invention further provides a one-piece hub shell of a bicycle, which comprises: a shell portion having an spindle hole along an axis, a first side located on one of two opposite sides of the spindle hole, and a second side located on the other one of the two opposite sides of the spindle hole; and a toothed portion integrally formed within the shell portion adjoining the first side, the toothed portion including a plurality of ratchet teeth annularly arranged and surrounding the axis.

The technical advantage of the present invention is that through the design of the toothed portion integrally formed on the hub shell, the hub shell can be connected with the pawl system without being additionally assembled with a ratchet ring, effectively reducing the concentricity error, assembly error, deformation risk, and limitations in material selection caused by additional assembly processes, while improving the assembly efficiency, reliability, and service strength of the hub shell and reducing the machining cost.

Preferably, the toothed portion further includes a flat annular surface facing outside, and a plurality of weight-reduction grooves recessed from the flat annular surface towards the second side and surrounding the axis, thereby enabling the hub shell to be lightweight, effectively improving riding efficiency, reducing energy consumption, and increasing steering sensitivity and comfort.

Preferably, a direction in which each of the weight-reduction grooves is recessed is parallel to the axis.

### BRIEF DESCRIPTION OF THE DRAWINGS

FIG. 1 is a flowchart of the first embodiment of the present invention;
FIG. 2A is a schematic diagram of the first embodiment of the present invention, showing the three-dimensional state of the forged blank forming step;
FIG. 2B is a schematic diagram of the first embodiment of the present invention, showing the cross-sectional state of the forged blank forming step;
FIG. 3A is a schematic diagram of the first embodiment of the present invention, showing the three-dimensional state of the tooth position machining step;
FIG. 3B is a schematic diagram of the first embodiment of the present invention, showing the cross-sectional state of the tooth position machining step;
FIG. 4A is a schematic diagram of the first embodiment of the present invention, showing the three-dimensional state of the tooth profile machining step;
FIG. 4B is a schematic diagram of the first embodiment of the present invention, showing the cross-sectional state of the tooth profile machining step;
FIG. 5A is a schematic diagram of the first embodiment of the present invention, showing the three-dimensional state of the final shaping step;
FIG. 5B is a schematic diagram of the first embodiment of the present invention, showing the cross-sectional state of the final shaping step;
FIG. 6 is a flowchart of the second embodiment of the present invention;
FIG. 7A is a schematic diagram of the first embodiment of the present invention, showing the three-dimensional state of the forged blank forming step; and
FIG. 7B is a schematic diagram of the first embodiment of the present invention, showing the cross-sectional state of the forged blank forming step.

### DETAILED DESCRIPTION

Before the present invention is described in detail, it should be noted that, in the following description, similar components are denoted by the same reference symbols.

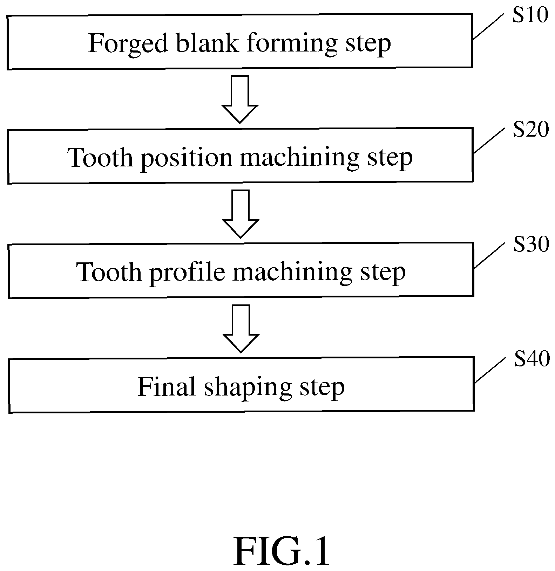

Referring to FIG. 1, a method for manufacturing a one-piece hub shell of a bicycle according to a first embodiment of the present invention sequentially includes a forged blank forming step S10, a tooth position machining step S20, a tooth profile machining step S30, and a final shaping step S40. These steps are detailed as follows.

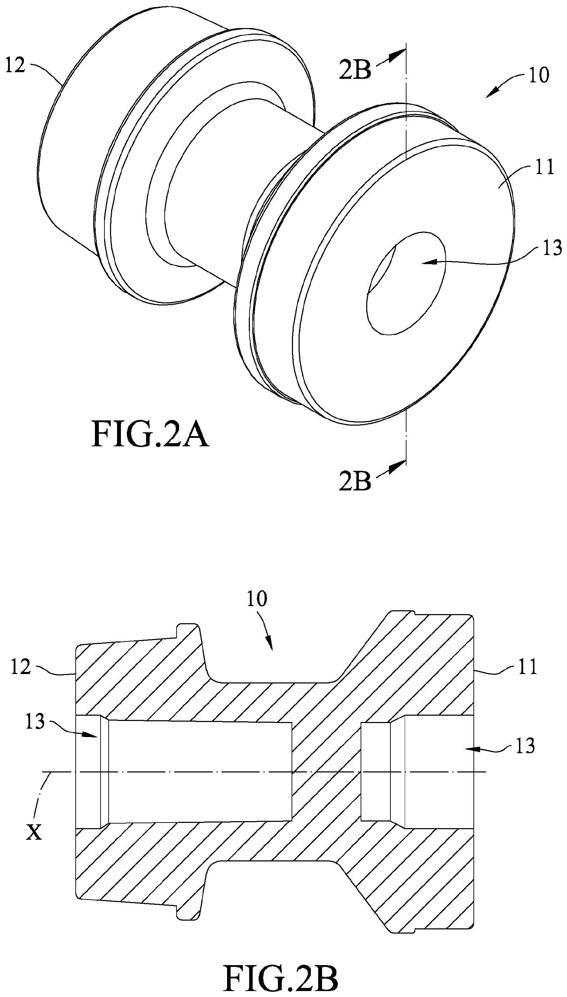

The forged blank forming step S10: as shown in FIGS. 2A and 2B, forging a metal blank into a hub shell blank 10. The hub shell blank 10 includes a first side 11 along an axis X, a second side 12 opposite the first side 11, and two axial grooves 13 recessed along the axis X from the first side 11 and the second side 12, respectively.

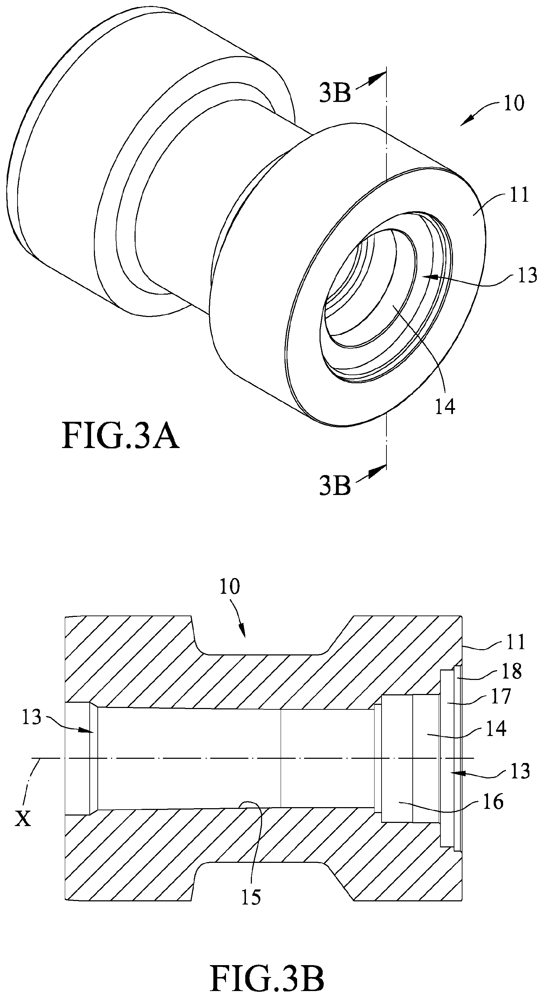

The tooth position machining step S20: as shown in FIGS. 3A and 3B, machining the spindle groove 13 adjoining the first side 11 of the hub shell blank 10 to form a tooth positioning portion 14. In this embodiment, the tooth position machining step S20 is to machine the hub shell blank 10 by, for example, but not limited to, a CNC processing machine, to form an spindle hole 15 along the axis X by making the two axial grooves 13 communicated, to form a bearing recess 16 on one of the two opposite sides of the tooth positioning portion 14, and to form an assembling recess 17 and a dustproof recess 18 on the other one of the two opposite sides of the tooth positioning portion 14.

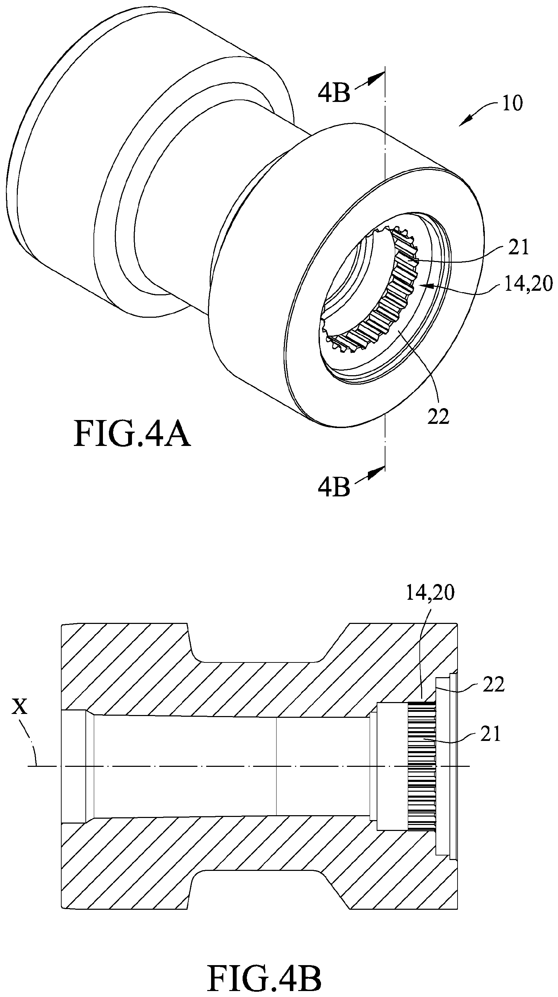

The tooth profile machining step S30: as shown in FIGS. 4A and 4B, machining the tooth positioning portion 14 of the hub shell blank 10 to form a toothed portion 20. The toothed portion 20 includes a plurality of ratchet teeth 21 annularly arranged and surrounding the axis X and a flat annular surface 22 facing outside. In this embodiment, the tooth profile machining step S30 is performed by a CNC processing machine to form the toothed portion 20 on the tooth positioning portion 14, but is not limited thereto. The toothed portion 20, ratchet teeth 21, and annular surface 22 may be formed as prototype or finalized structures during this step.

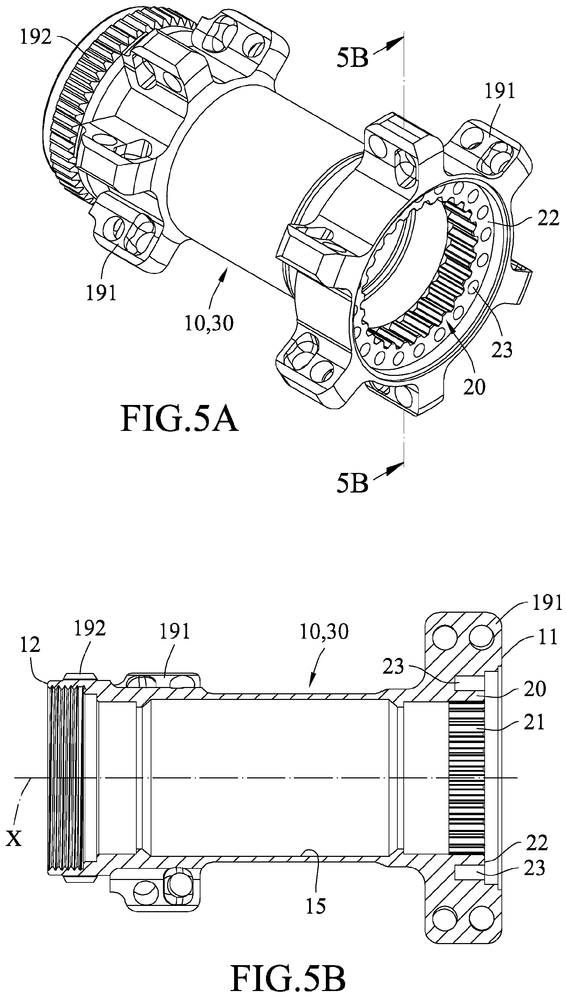

The final shaping step S40: as shown in FIGS. 5A and 5B, machining the flat annular surface 22 of the toothed portion 20 to form a plurality of weight-reduction grooves 23 recessed from the flat annular surface 22 and surrounding the axis X. In this embodiment, each of the weight-reduction grooves 23 is recessed in a direction parallel to the axis X and has, for example, but not limited to, a circular cross-section. The shape of cross-section of the weight-reduction groove 23 can also be in other geometric shapes, such as a rectangle. Furthermore, the final shaping step S40 is to machine the hub shell blank 10 using, for example, but not limited to, a CNC processing machine to form spoke hole portions 191, an external toothed ring portion 192, and other structures, thereby finalizing the hub shell blank 10 into a shell portion 30 to accomplish a one-piece hub shell. Furthermore, once the toothed portion 20, the ratchet teeth 21, and the flat annular surface 22 formed in the tooth profile machining step S30 are in prototype form, all the toothed portion 20, the ratchet teeth 21, and the flat annular surface 22 in prototype form can be machined into their finalized form in the final shaping step S40.

Accordingly, referring to FIGS. 5A and 5B, a one-piece hub shell of a bicycle provided by the first embodiment of the present invention comprises: a shell portion 30 having an spindle hole 15 along the axis X, a first side 11 located on one of two opposite sides of the spindle hole 15, and a second side 12 located on the other one of the two opposite sides of the spindle hole 15; and a toothed portion 20, which is integrally formed within the shell portion 30, adjoins the first side 11, and includes a plurality of ratchet teeth 21 annularly arranged and surrounding the axis X. The toothed portion 20 further includes a flat annular surface 22 facing outside, and a plurality of weight-reduction grooves 23 recessed from the flat annular surface 22 towards the second side 12 and surrounding the axis X. The direction in which each of the weight-reduction grooves 23 is recessed is parallel to the axis X.

The above is the description of the main steps of the first embodiment of the present invention and the one-piece hub shell of a bicycle. The efficacy of the present invention is described as follows.

Since the present invention implements the forged blank forming step S10, the tooth position machining step S20, the tooth profile machining step S30, and the final shaping step S40 in sequence, the one-piece hub shell, in addition to the structure of the conventional hub shell, also has the toothed portion 20 formed integrally, when being accomplished. Therefore, the hub shell can be connected with the pawl system without being additionally assembled with a ratchet ring, effectively reducing the concentricity error, assembly error, deformation risk, and limitations in material selection caused by additional assembly processes, while improving the assembly efficiency, reliability, and service strength of the hub shell and reducing the machining cost.

It is worth noting that, the present invention particularly machines the flat annular surface 22 of the toothed portion 20 in the final shaping step S40 to make the toothed portion 20 have a plurality of weight-reduction grooves 23 recessed from the flat annular surface 22 and surrounding the axis X, thereby enabling the hub shell to be lightweight, effectively improving riding efficiency, reducing energy consumption, and increasing steering sensitivity and comfort.

In addition, each of the weight-reduction grooves 23 surrounds the axis X and is recessed and formed from the flat annular surface 22 at equal intervals. Therefore, in addition to achieving the lightweight effect, the hub shell can also maintain a balanced weight distribution during spinning and has good stability.

Moreover, each of the weight-reduction grooves 23 is machined and formed in the final shaping step S40 after the tooth profile machining step S30. That is, the ratchet teeth 21 of the toothed portion 20 are machined prior to the forming of the weight-reduction grooves 23. Therefore, when the ratchet teeth 21 are machined, the toothed portion 20 is still a structurally intact structure with high rigidity and is not easily deformed due to the influence of the weight-reduction grooves, ensuring the machining accuracy of the ratchet teeth 21. If the weight-reduction grooves 23 are machined first, the rigidity of the material decreases, which may cause deformation or internal stress concentration during the machining of the ratchet teeth 21, affecting the strength and durability.

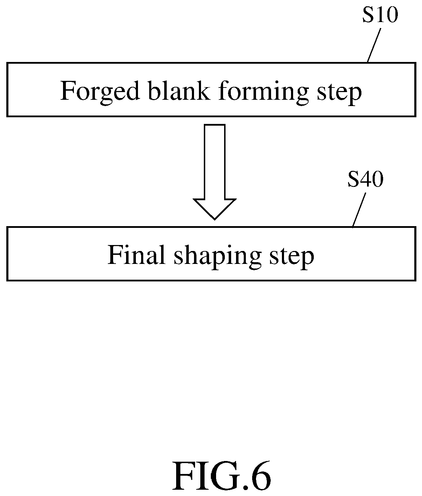

Referring to FIG. 6, a method for manufacturing a one-piece hub shell of a bicycle provided by the second embodiment of the present invention sequentially includes a forged blank forming step S10 and a final shaping step S40.

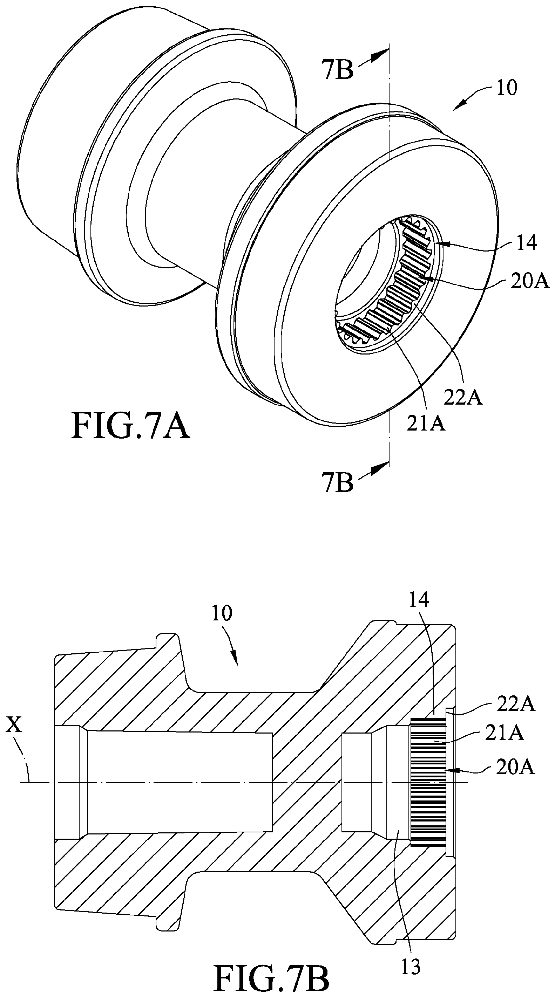

The forged blank forming step S10: as shown in FIGS. 7A and 7B, forging a metal blank to form a hub shell blank 10. The hub shell blank 10 at least includes a spindle groove 13 along an axis X, and the spindle groove 13 has a tooth positioning portion 14. A rudiment of toothed portion 20A is integrally formed on the tooth positioning portion 14. The rudiment of toothed portion 20A includes a plurality of rudiments of ratchet teeth 21A annularly arranged and surrounding the axis X and a rudiment of flat annular surface 22A facing outside.

The final shaping step S40: as shown in FIGS. 5A and 5B, machining the rudiment of toothed portion 20A of the hub shell blank 10 with a CNC machining machine to complete a toothed portion 20 on the rudiment of toothed portion 20A. the toothed portion 20 includes a plurality of ratchet teeth 21 annularly arranged and surrounding the axis X and an outwardly facing annular surface 22. The annular surface 22 of the toothed portion 20 is machined to form a plurality of weight-reduction grooves 23 recessed from the annular surface 22 and surrounding the axis X.

Accordingly, compared with the first embodiment, the second embodiment of the present invention further eliminates the tooth position machining step S20. In addition to the effects described in the first embodiment, the second embodiment can further reduce the production cost, improve the production efficiency, enhance the product quality, and reduce the environmental impact.

In terms of cost reduction, eliminating the tooth position machining step S20 performed by the CNC machining machine can reduce material waste, so the second embodiment is particularly suitable for high-cost metals, such as titanium alloys and magnesium alloys. In addition, the shortened machining time can reduce tool wear and maintenance costs. Meanwhile, reducing the operation time of equipment can also save energy and machining costs.

In terms of production efficiency, eliminating the tooth position machining step S20 performed by the CNC machining machine can shorten the cycle and improve the mass production speed.

In terms of product quality, eliminating the tooth position machining step S20 performed by the CNC machining machine can reduce machining errors and improve accuracy. The unibody machining technology of the present invention can avoid cumulative errors and ensure dimensional stability.

In terms of reducing environmental impact, eliminating the tooth position machining step S20 performed by the CNC machining machine can reduce the generation of waste and the use of coolant, thereby reducing environmental pollution and carbon emissions, which is in line with the trend of green manufacturing.

## Claims

1. A one-piece hub shell of a bicycle, **characterized in that** the one-piece hub shell of the bicycle comprises:
a shell portion (30) having a spindle hole (15) along an axis (X), a first side (11) located on one of two opposite sides of the spindle hole (15), and a second side (12) located on the other one of the two opposite sides of the spindle hole (15); and
a toothed portion (20) integrally formed within the shell portion (30) adjoining the first side (11), and the toothed portion (20) including a plurality of ratchet teeth (21) annularly arranged and surrounding the axis (X).

2. The one-piece hub shell of the bicycle as claimed in claim 1 is **characterized in that** the toothed portion (20) further includes a flat annular surface (22) facing outside, and a plurality of weight-reduction grooves (23) recessed from the flat annular surface (22) towards the second side (12) and surrounding the axis (X).

3. The one-piece hub shell of the bicycle as claimed in claim 2 is **characterized in that** a direction in which each weight-reduction groove (23) of the plurality of weight-reduction grooves (23) is recessed is parallel to the axis (X).

4. A method for manufacturing a one-piece hub shell of a bicycle, **characterized in that** the one-piece hub shell of the bicycle comprises:
a forged blank forming step (S10): forging a metal blank into a hub shell blank (10), wherein the hub shell blank (10) at least includes a spindle groove (13) along an axis (X);
a tooth position machining step (S20): machining the spindle groove (13) of the hub shell blank (10) to form a tooth positioning portion (14) in the spindle groove (13); and
a tooth profile machining step (S30): machining the tooth positioning portion (14) of the hub shell blank (10) to form a toothed portion (20) on the tooth positioning portion (14), wherein the toothed portion (20) includes a plurality of ratchet teeth (21) annularly arranged and surrounding the axis (X).

5. The method for manufacturing the one-piece hub shell of the bicycle as claimed in claim 4 is **characterized in that** during the tooth profile machining step (S30), the toothed portion (20) includes a flat annular surface (22) facing outside; and after the tooth profile machining step (S30), the method further comprises a final shaping step (S40): machining the flat annular surface (22) of the toothed portion (20) to form a plurality of weight-reduction grooves (23) recessed from the flat annular surface (22) and surrounding the axis (X).

6. The method for manufacturing the one-piece hub shell of the bicycle as claimed in claim 5 is **characterized in that** the tooth position machining step (S20), the tooth profile machining step (S30), and the final shaping step (S40) are performed using a CNC processing machine.

7. A method for manufacturing a one-piece hub shell of a bicycle **characterized in that** the one-piece hub shell of the bicycle comprises:
a forged blank forming step (S10): forging a metal blank into a hub shell blank (10), wherein the hub shell blank (10) at least includes a spindle groove (13) along an axis (X), the spindle groove (13) includes a tooth positioning portion (14), the tooth positioning portion (14) has a rudiment of toothed portion (20A), the rudiment of toothed portion (20A) includes a plurality of rudiments of ratchet teeth (21A) annularly arranged and surrounding the axis (X); and
a final shaping step (S40): machining the rudiment of toothed portion (20A) of the hub shell blank (10) to complete a toothed portion (20) on the rudiment of toothed portion (20A), wherein the toothed portion (20) includes a plurality of ratchet teeth (21).

8. The method for manufacturing the one-piece hub shell of the bicycle as claimed in claim 7 is **characterized in that** during the final shaping step (S40), the toothed portion (20) includes a flat annular surface (22) facing outside, and the flat annular surface (22) is machined to form a plurality of weight-reduction grooves (23) recessed from the flat annular surface (22) and surrounding the axis (X).

9. The method for manufacturing the one-piece hub shell of the bicycle as claimed in claim 8 is **characterized in that** the final shaping step (S40) is performed using a CNC processing machine.
